# EUROPÄISCHE PATENTANMELDUNG

(11) **EP 2 937 973 A1**
(43) Veröffentlichungstag der Anmeldung: **28.10.2015**
(21) Anmeldenummer: 14166019.1
(22) Anmeldetag: 25.04.2014
(51) Int. Cl.: H02K 1/18, H02K 5/15, H02K 5/24, H02K 9/16

(54) **Rotierende elektrische Maschine**

(71) Anmelder: Siemens Aktiengesellschaft, 80333 München (DE)
(72) Erfinder: Joseph, Eric, 90489 Nürnberg (DE); Deeg, Christian, 90518 Altdorf (DE); Eichinger, Benjamin, 90610 Winkelhaid (DE); Scharf, Uwe, 90763 Fürth (DE); Scherer, Matthias, 90459 Nürnberg (DE); Stegherr, Michael, 90491 Nürnberg (DE); Weiß, Sebastian, 90522 Oberasbach (DE)

(57) **Zusammenfassung**

Die Erfindung betrifft eine rotierende elektrische Maschine (1), die einen Rotor mit einer Rotorwelle, einen Stator (30) mit zwei sich axial gegenüber liegenden Statorseiten, ein den Stator (30) wenigstens teilweise umgebendes Gehäuse (20) und an jeder Statorseite ein Lagerschild (40) zur Lagerung der Rotorwelle umfasst. Der Stator (30) weist ein Blechpaket (31) auf, durch das mehrere axial verlaufende Versteifungselemente (32) mit aus dem Blechpaket (31) heraus ragenden Endabschnitten geführt sind. Das Gehäuse (20) weist an jeder Statorseite wenigstens ein Endabschnittslager (25) auf, mittels dessen ein Endabschnitt eines Versteifungselementes (32) gelagert ist, so dass der Stator (30) durch die Lagerung von Endabschnitten der Versteifungselemente (32) in Endabschnittslagern (25) bewegbar in dem Gehäuse (20) gelagert ist.

## Beschreibung

Die Erfindung betrifft eine rotierende elektrische Maschine mit einem Rotor, einem Stator, einem den Stator wenigstens teilweise umgebenden Gehäuse und zwei Lagerschilden zur Lagerung einer Rotorwelle des Rotors.

Elektrische Maschinen dieser Art, insbesondere für den Hochspannungsbereich beispielsweise von 6 kV bis 11 kV, weisen häufig ein rippengekühltes Gehäuse, beispielsweise ein Graugussgehäuse, einen Stator mit einem dem Gehäuse eingepressten Blechpaket und einen Wellenlüfter oder ein Fremdlüfteraggregat auf. Derartige elektrische Maschinen weisen eine Reihe von Nachteilen auf. Die Bearbeitung des Gehäuses und der Lagerschilde ist aufwändig und kostenintensiv. Es besteht die Gefahr des Abhebens der Luftströmung vom Gehäuse, wodurch die Kühlleistung abnimmt. Der Presssitz zwischen Blechpaket und Gehäuse verschlechtert den Wärmeübergang. Bei einem Einsatz von Entkopplungselementen zur Schwingungsdämpfung in Kontaktbereichen des Gehäuses mit einer Standfläche der elektrischen Maschine können die Abmaße der elektrischen Maschine, beispielsweise die vorgesehene Achshöhe, oft nicht eingehalten werden. Zudem bewirken derartige Entkopplungselemente, dass ein auf die Rotorwelle wirkendes Drehmoment zu einem Versatz der Maschinenachse führen kann, was zu Schäden an der elektrischen Maschine oder einer Kupplung führen kann. Um derartige Schäden zu vermeiden, werden beispielsweise flexible Kupplungen verwendet oder der Antriebsstrang wird aufwändig ausgerichtet.

Der Erfindung liegt die Aufgabe zugrunde, eine insbesondere hinsichtlich der Schwingungsdämpfung verbesserte rotierende elektrische Maschine anzugeben.

Die Aufgabe wird erfindungsgemäß durch die Merkmale des Anspruchs 1 gelöst.

Vorteilhafte Ausgestaltungen der Erfindung sind Gegenstand der Unteransprüche.

Eine erfindungsgemäße rotierende elektrische Maschine umfasst einen Rotor mit einer Rotorwelle, deren Längsachse eine axiale Richtung definiert, einen Stator mit zwei sich axial gegenüber liegenden Statorseiten, ein den Stator wenigstens teilweise umgebendes Gehäuse und an jeder Statorseite ein Lagerschild zur Lagerung der Rotorwelle. Der Stator weist ein Blechpaket auf, durch das mehrere axial verlaufende Versteifungselemente mit aus dem Blechpaket heraus ragenden Endabschnitten geführt sind. Das Gehäuse weist an jeder Statorseite wenigstens ein Endabschnittslager auf, mittels dessen ein Endabschnitt eines Versteifungselementes gelagert ist, so dass der Stator durch die Lagerung von Endabschnitten der Versteifungselemente in Endabschnittslagern bewegbar in dem Gehäuse gelagert ist.

Erfindungsgemäß wird der Stator also über durch sein Blechpaket geführte Versteifungselemente in Endabschnittslagern des Gehäuses bewegbar gelagert, d. h. in dem Gehäuse sozusagen "aufgehängt". Dadurch kann vorteilhaft ein auf die Rotorwelle wirkendes Drehmoment in über den Statorumfang verteilten Endabschnittslagern aufgenommen werden, so dass dieses Drehmoment keinen Versatz der Maschinenachse, sondern nur eine leichte Drehung des Stators gegenüber dem Gehäuse bewirkt. Auf diese Weise können vorteilhaft Schäden an der elektrischen Maschine oder einer Kupplung durch einen Versatz der Maschinenachse vermieden werden bzw. es werden keine aufwändigen flexiblen Kupplungen oder Ausrichtungen des Antriebsstrangs zur Vermeidung derartiger Schäden benötigt. Ferner kann das Gehäuse weitgehend von dem Stator körperschallentkoppelt werden, so dass in dem Blechpaket entstehende Geräusche nicht an das Gehäuse weitergegeben werden, da eine starre Kopplung des Stators an das Gehäuse entfällt. Durch die erfindungsgemäße Lagerung des Stators in dem Gehäuse entfällt ferner ein Presssitz des Blechpakets in dem Gehäuse, so dass vorteilhaft einerseits große Bauteile mit einer geringeren Genauigkeit gefertigt werden können, wodurch deren Herstellung vereinfacht wird, und andererseits Gussbauteile nicht auf Zug beansprucht werden und daher nicht auf Zugbeanspruchung ausgelegt werden müssen.

Eine Ausgestaltung der Erfindung sieht vor, dass jedes Endabschnittslager wenigstens ein Dämpfungselement zur Dämpfung der Lagerung des mittels des Endabschnittslagers gelagerten Versteifungselementes und damit des Stators aufweist.

Dadurch wird eine Schwingungsdämpfung der elektrischen Maschine in dessen Gehäuse realisiert, die einerseits die Drehmomentenabstützung durch die Endabschnittslager weiter verbessert und andererseits eine Schwingungsdämpfung an den Füßen bzw. im Bereich der Standfläche der elektrischen Maschine überflüssig macht, so dass die Achshöhe der elektrischen Maschine nicht durch eine Schwingungsdämpfung an den Füßen bzw. im Bereich der Standfläche vergrößert wird.

Eine weitere Ausgestaltung der Erfindung sieht vor, dass wenigstens ein Versteifungselement als ein Kühlrohr zur Führung eines Kühlmediums ausgebildet ist. Vorzugsweise sind alle Versteifungselemente als Kühlrohre zur Führung eines Kühlmediums ausgebildet.

Dadurch können Versteifungselemente vorteilhaft gleichzeitig zur Kühlung der elektrischen Maschine verwendet werden. Dies ermöglicht eine direkte Statorkühlung mittels der Versteifungselemente, wodurch ein Wärmeübergang im Vergleich zu einem verrippten Gehäuse entfällt und eine intensivere Kühlung und damit eine höhere Leistung der elektrischen Maschine ermöglicht wird. Durch die Führung des Kühlmediums in den Versteifungselementen und innerhalb des Gehäuses besteht außerdem keine Gefahr des Abhebens von Kühlluft von der elektrischen Maschine und einer dadurch verursachten Minderung der Kühlleistung. Außerdem ermöglicht die Ausbildung von Versteifungselementen als Kühlrohre eine einfache Realisierung einer Flüssigkeitskühlung, insbesondere einer Wasserkühlung. Ferner wird die Nutzung eines Wellenthermosiphons für die Reduzierung von Reibungsverlusten ermöglicht, wenn die Kühlung zur Vermeidung eines Innenkühlkreises ausreicht, wodurch der Wirkungsgrad der elektrischen Maschine erhöht werden kann.

Eine weitere Ausgestaltung der Erfindung sieht wenigstens ein Verbindungsrohr vor, das an einer Statorseite Endabschnitte zweier verschiedener jeweils als ein Kühlrohr ausgebildeter Versteifungselemente miteinander verbindet.

Dies ermöglicht vorteilhaft die Verbindung von Kühlrohren zu einem durch das Blechpaket geführten Kühlkreislauf.

Eine weitere Ausgestaltung der Erfindung sieht vor, dass jedes Lagerschild fest mit dem Stator verbunden ist.

Dadurch wird der Rotor über die Lagerschilde an den Stator gekoppelt und damit mit dem Stator zusammen bewegbar in dem Gehäuse gelagert, was die oben genannten Vorteile bewirkt.

Bei der vorgenannten Ausgestaltung der Erfindung ist ferner vorzugsweise wenigstens ein Lagerschild fest mit wenigstens einem Versteifungselement verbunden.

Dies ermöglicht, Versteifungselemente zur Verbindung der Lagerschilde mit dem Stator zu nutzen.

Eine weitere Ausgestaltung der Erfindung sieht vor, dass jeder aus dem Blechpaket heraus ragende Endabschnitt eines Versteifungselementes entweder mittels eines Endabschnittslagers des Gehäuses gelagert ist oder fest mit einem Lagerschild verbunden ist.

Dadurch werden vorteilhaft alle Versteifungselemente genutzt, um entweder den Stator an das Gehäuse zu koppeln oder ein Lagerschild mit dem Stator zu verbinden.

Eine weitere Ausgestaltung der Erfindung sieht vor, dass das Gehäuse aus zwei zusammengefügten Gehäuseteilen besteht, wobei ein erster Gehäuseteil alle Endabschnittslager an einer ersten Statorseite aufweist und der zweite Gehäuseteil alle Endabschnittslager an der zweiten Statorseite aufweist.

Dadurch wird vorteilhaft die Montage der elektrischen Maschine vereinfacht, indem die beiden Gehäuseteile in einfacher Weise von verschiedenen Statorseiten an den Stator geführt, über die Endabschnittslager jeweils an den Stator gekoppelt und zusammengefügt werden können.

Eine weitere Ausgestaltung der Erfindung sieht wenigstens eine Flanschverbindung zum Zusammenfügen der beiden Gehäuseteile vor.

Dies ermöglicht vorteilhaft eine einfache und zuverlässige Verbindung der beiden Gehäuseteile.

Eine weitere Ausgestaltung der Erfindung sieht wenigstens ein aus einem Edelstahl gefertigtes Versteifungselement vor.

Dies ermöglicht vorteilhaft eine stabile Ausführung von Versteifungselementen.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
- FIG 1: eine perspektivische Darstellung eines Gehäuses, eines Stators und eines Lagerschildes einer rotierenden elektrischen Maschine,
- FIG 2: eine Frontansicht eines Gehäuses, eines Stators und eines Lagerschildes einer rotierenden elektrischen Maschine,
- FIG 3: eine perspektivische Explosionsdarstellung eines Gehäuses, eines Stators und eines Lagerschildes einer rotierenden elektrischen Maschine,
- FIG 4: eine Frontansicht eines Gehäuses, eines Stators und eines Lagerschildes einer rotierenden elektrischen Maschine mit einer Darstellung von Drehmomenten,
- FIG 5: eine perspektivische Darstellung eines Gehäuses, eines luftgekühlten Stators und eines Lagerschildes einer rotierenden elektrischen Maschine mit einer Darstellung von Luftströmungsrichtungen, und
- FIG 6: eine perspektivische Darstellung eines Gehäuses, eines wassergekühlten Stators und eines Lagerschildes einer rotierenden elektrischen Maschine mit einer Darstellung einer Kühlwasserströmung.

Einander entsprechende Teile sind in allen Figuren mit den gleichen Bezugszeichen versehen.

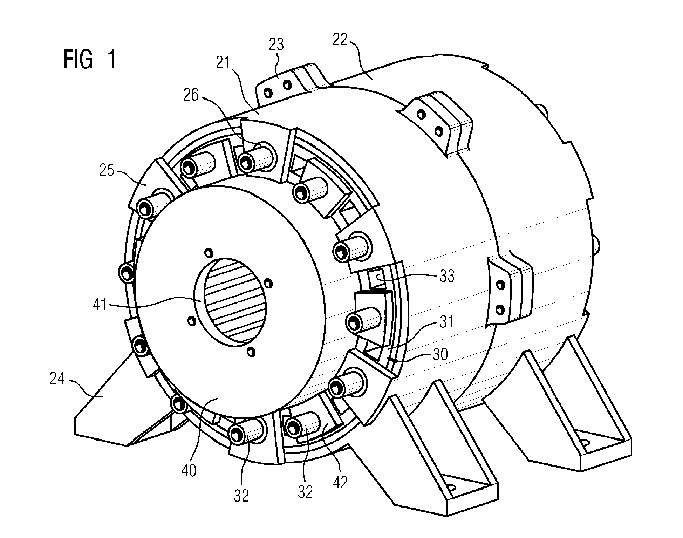

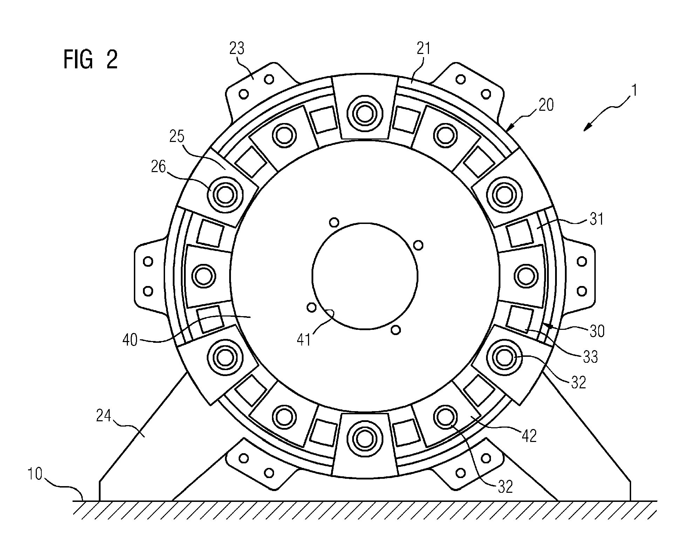

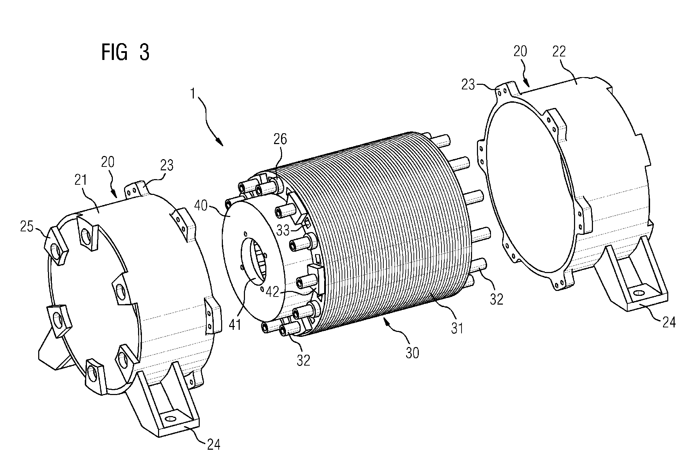

Die Figuren 1 bis 3 zeigen jeweils ein Gehäuse 20, einen Stator 30 und ein Lagerschild 40 einer rotierenden elektrischen Maschine 1. Dabei zeigt Figur 1 eine perspektivische Darstellung, Figur 2 zeigt eine Frontansicht und Figur 3 zeigt eine perspektivische Explosionsdarstellung dieser Komponenten der elektrischen Maschine 1. Die elektrische Maschine 1 weist ferner einen in den Figuren nicht dargestellten Rotor mit einer Rotorwelle auf, deren Längsachse eine axiale Richtung definiert.

Der Stator 30 weist ein im Wesentlichen hohlzylinderförmiges Blechpaket 31 auf, das um den Rotor herum angeordnet ist und dessen Zylinderachse mit der Längsachse des Rotors zusammenfällt. Das Blechpaket 31 ist in unten näher beschriebener Weise bewegbar in dem Gehäuse 20 gelagert. An den beiden sich gegenüber liegenden Statorseiten des Stators 30 ist jeweils ein Lagerschild 40 in unter näher beschriebener Weise fest mit dem Stator 30 verbunden. Die Lagerschilde 40 dienen der Lagerung der Rotorwelle. Dazu weist jedes Lagerschild 40 eine Lagerschildöffnung 41 auf, durch die ein Wellenende der Rotorwelle geführt ist und in der ein (nicht dargestelltes) Wellenlager zur Lagerung der Rotorwelle aufgenommen ist.

Durch das Blechpaket 31 sind mehrere axial verlaufende Versteifungselemente 32 mit aus dem Blechpaket 31 heraus ragenden Endabschnitten geführt. Jedes Versteifungselement 32 ist als ein gerades Kühlrohr zur Führung eines Kühlmediums ausgebildet. Die Versteifungselemente 32 sind im Blechpaket 31 äquidistant entlang einer um die Zylinderachse des Blechpaketes 31 verlaufenden Kreislinie angeordnet.

Entlang dieser Kreislinie ist jedes zweite Versteifungselement 32 mit seinen beiden Endabschnitten in jeweils einem Endabschnittslager 25 des Gehäuses 20 gelagert. Dazu weist jedes Endabschnittslager 25 eine Lageröffnung auf, durch die der in dem Endabschnittslager 25 gelagerte Endabschnitt eines Versteifungselementes 32 geführt ist und an der ein Dämpfungselement 26 des Endabschnittslagers 25 angeordnet ist, das diesen Endabschnitt ringförmig umgibt und zur Dämpfung der Lagerung des Endabschnittes dient, so dass Bewegungen des Endabschnittes in dem Endabschnittslager 25 senkrecht zur axialen Richtung durch das Dämpfungselement 26 gedämpft werden. Durch diese Lagerung von Endabschnitten der Versteifungselemente 32 in den Endabschnittslagern 25 des Gehäuses 20 ist der Stator 30 bewegbar in dem Gehäuse 20 gelagert, so dass der Stator 30 um kleine Winkel relativ zum Gehäuse 20 und durch die Dämpfungselemente 26 gedämpft um die Zylinderachse des Blechpaketes 31 drehbar ist.

Die Endabschnitte der weiteren Versteifungselemente 32, die nicht auf diese Weise mittels Endabschnittslagern 25 des Gehäuses 20 gelagert sind, korrespondieren jeweils zu einem Lagerschildflansch 42 eines Lagerschildes 40. Dabei weist jeder Lagerschildflansch 42 eine Flanschöffnung auf, durch die der jeweilige Endabschnitt eines Versteifungselementes 32 geführt ist. Jeder Lagerschildflansch 42 ist fest mit dem durch seine Flanschöffnung geführten Endabschnitt eines Versteifungselementes 32 und/oder fest mit dem Blechpaket 31 verbunden. Zwischen je zwei benachbarten Versteifungselementen 32 verläuft ein Kühlkanal 33 axial durch das Blechpaket 31, wobei jedes Ende jedes Kühlkanals 33 zwischen einem Lagerschildflansch 42 und einem Endabschnittslager 25 liegt.

Das Gehäuse 20 besteht aus zwei Gehäuseteilen 21, 22, die entlang einer zu der axialen Richtung senkrechten Ebene mittels mehrerer Flanschverbindungen 23 zusammengefügt sind, so dass ein erster Gehäuseteil 21 alle Endabschnittslager 25 an einer ersten Statorseite aufweist und der zweite Gehäuseteil 22 alle Endabschnittslager 25 an der zweiten Statorseite aufweist. Jeder Gehäuseteil 21, 22 weist zwei Gehäusefüße 24 zum Aufstellen der elektrischen Maschine 1 auf einer Standfläche 10 auf.

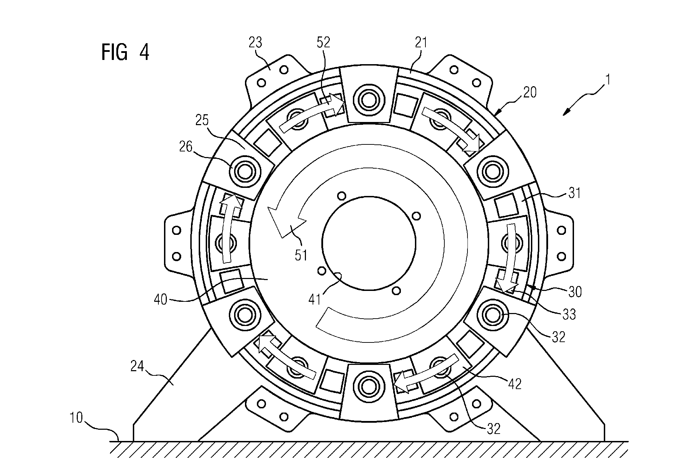

Figur 4 zeigt die bereits in Figur 2 dargestellte Frontansicht von Komponenten einer rotierenden elektrischen Maschine 1 mit einer Darstellung von Drehmomenten, die bei deren Betrieb auftreten. Die Drehmomente sind dabei durch mittels Pfeilen dargestellte den Drehmomenten entsprechende Drehrichtungen 51, 52 angedeutet. Durch die elektrische Maschine 1 wird ein einer ersten Drehrichtung 51 entsprechendes Maschinendrehmoment erzeugt. Das Maschinendrehmoment wird durch ein einer zweiten Drehrichtung 51 entsprechendes Gegendrehmoment der Endabschnittslager 25 kompensiert. Infolge der Lagerung des Stators 30 in dem Gehäuse 20 wird durch das Maschinendrehmoment dabei keine senkrecht zur axialen Richtung wirkende Kraft auf den Stator 30 ausgeübt, sondern lediglich eine leichte Verdrehung des Stators 30 gegenüber dem Gehäuse 20 bewirkt. Dadurch werden vorteilhaft Schäden an der elektrischen Maschinen 1 oder einer Kupplung verhindert.

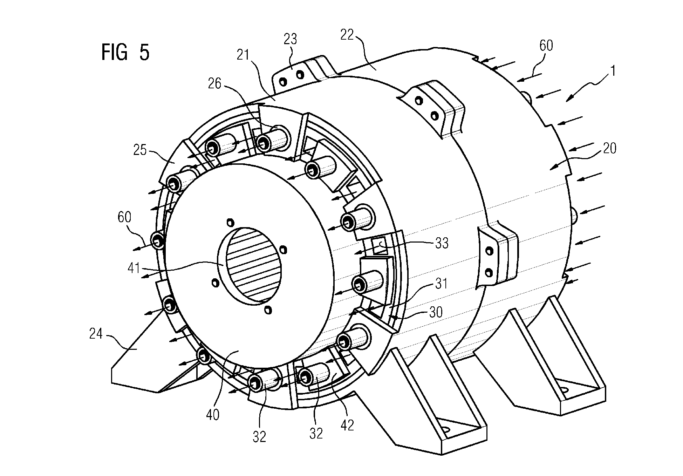

Figur 5 zeigt in einer perspektivischen Darstellung eine Ausgestaltung des in den Figuren 1 bis 4 dargestellten Ausführungsbeispiels einer elektrischen Maschine 1 mit einem luftgekühlten Stator 30. Bei dieser Ausgestaltung werden die als Kühlrohre ausgebildeten Versteifungselemente 32 und die Kühlkanäle 33 in dem Blechpaket 31 zur Führung von Kühlluft zur Kühlung des Stators 30 verwendet. Die entsprechenden Luftströmungsrichtungen 60 sind durch Pfeile dargestellt. Die Luftströmung wird durch einen (nicht dargestellten) Wellenlüfter (z. B. einen Radial-, Axial- oder Diagonallüfter) oder Fremdlüfter erzeugt und durch die Versteifungselemente 32 und die Kühlkanäle 33 gedrückt. Zudem wird die Kühlluft vorzugsweise zusätzlich zwischen dem Blechpaket 31 und dem Gehäuse 20 geführt, was vorteilhaft zu einer zusätzlichen Entwärmung der elektrischen Maschine 1 führt. Durch diese Konstruktion wird auch ein Abheben des Luftstroms von der elektrischen Maschine 1 verhindert. Die Luftführung vom Lüfter zum Blechpaket 31 kann beispielsweise durch eine Haube erfolgen. Die Entwärmung von (nicht dargestellten) Wickelköpfen einer Wicklung des Stators 30 erfolgt über die Lagerschilde 40.

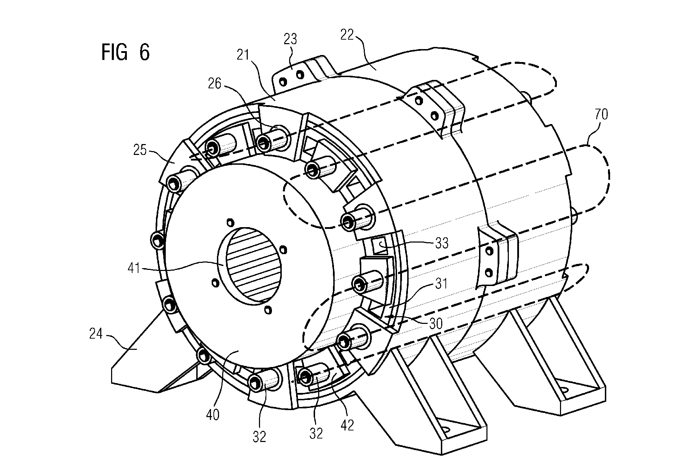

Figur 6 zeigt in einer perspektivischen Darstellung eine zur in Figur 5 dargestellten Ausgestaltung alternative Ausgestaltung des in den Figuren 1 bis 4 dargestellten Ausführungsbeispiels einer elektrischen Maschine 1 mit einem zumindest teilweise wassergekühlten Stator 30. Dabei werden die als Kühlrohre ausgebildeten Versteifungselemente 32 zur Führung von Kühlwasser zur Kühlung des Stators 30 verwendet. Das Kühlwasser wird mäanderartig durch die Versteifungselemente 32 geleitet. Figur 6 deutet einen Abschnitt der entsprechenden Kühlwasserströmung 70 durch eine gestrichelt dargestellte Linie dar. Um die Kühlwasserströmung 70 zu erzeugen, werden Endabschnitte von Versteifungselementen 32 an jeder Statorseite paarweise mittels (nicht dargestellten) gebogenen Verbindungsrohren, beispielsweise durch Orbitalschweißen oder durch Muffen, miteinander verbunden. Alternativ kann das Kühlwasser auch parallel über geeignete Sammler- bzw. Verteilerstücke durch die Versteifungselemente 32 geleitet werden. Die Kühlkanäle 33 im Blechpaket 31 können beispielsweise zusätzlich zur Luftkühlung für einen inneren Kühlluftkreislauf verwendet werden.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Rotierende elektrische Maschine (1), umfassend einen Rotor mit einer Rotorwelle, deren Längsachse eine axiale Richtung definiert, einen Stator (30) mit zwei sich axial gegenüber liegenden Statorseiten, ein den Stator (30) wenigstens teilweise umgebendes Gehäuse (20) und an jeder Statorseite ein Lagerschild (40) zur Lagerung der Rotorwelle, wobei
- der Stator (30) ein Blechpaket (31) aufweist, durch das mehrere axial verlaufende Versteifungselemente (32) mit aus dem Blechpaket (31) heraus ragenden Endabschnitten geführt sind,
- und das Gehäuse (20) an jeder Statorseite wenigstens ein Endabschnittslager (25) aufweist, mittels dessen ein Endabschnitt eines Versteifungselementes (32) gelagert ist,
- so dass der Stator (30) durch die Lagerung von Endabschnitten der Versteifungselemente (32) in Endabschnittslagern (25) bewegbar in dem Gehäuse (20) gelagert ist.

2. Rotierende elektrische Maschine (1) nach Anspruch 1, **dadurch gekennzeichnet, dass** jedes Endabschnittslager (25) wenigstens ein Dämpfungselement (26) zur Dämpfung der Lagerung des mittels des Endabschnittslagers (25) gelagerten Versteifungselementes (32) und damit des Stators (30) aufweist.

3. Rotierende elektrische Maschine (1) nach einem der vorhergehenden Ansprüche,
**dadurch gekennzeichnet, dass** wenigstens ein Versteifungselement (32) als ein Kühlrohr zur Führung eines Kühlmediums ausgebildet ist.

4. Rotierende elektrische Maschine (1) nach Anspruch 3, **gekennzeichnet durch** wenigstens ein Verbindungsrohr, das an einer Statorseite Endabschnitte zweier verschiedener jeweils als ein Kühlrohr ausgebildeter Versteifungselemente (32) miteinander verbindet.

5. Rotierende elektrische Maschine (1) nach einem der vorhergehenden Ansprüche,
**dadurch gekennzeichnet, dass** jedes Lagerschild (40) fest mit dem Stator (30) verbunden ist.

6. Rotierende elektrische Maschine (1) nach Anspruch 5, **dadurch gekennzeichnet, dass** wenigstens ein Lagerschild (40) fest mit wenigstens einem Versteifungselement (32) verbunden ist.

7. Rotierende elektrische Maschine (1) nach einem der vorhergehenden Ansprüche,
**dadurch gekennzeichnet, dass** jeder aus dem Blechpaket (31) heraus ragende Endabschnitt eines Versteifungselementes (32) entweder mittels eines Endabschnittslagers (25) des Gehäuses (20) gelagert ist oder fest mit einem Lagerschild (40) verbunden ist.

8. Rotierende elektrische Maschine (1) nach einem der vorhergehenden Ansprüche,
**dadurch gekennzeichnet, dass** das Gehäuse (20) aus zwei zusammengefügten Gehäuseteilen (21, 22) besteht, wobei ein erster Gehäuseteil (21) alle Endabschnittslager (25) an einer ersten Statorseite aufweist und der zweite Gehäuseteil (22) alle Endabschnittslager (25) an der zweiten Statorseite aufweist.

9. Rotierende elektrische Maschine (1) nach Anspruch 8, **gekennzeichnet durch** wenigstens eine Flanschverbindung (23) zum Zusammenfügen der beiden Gehäuseteile (21, 22).

10. Rotierende elektrische Maschine (1) nach einem der vorhergehenden Ansprüche,
**gekennzeichnet durch** wenigstens ein aus einem Edelstahl gefertigtes Versteifungselement (32).
